# EUROPEAN PATENT SPECIFICATION

(11) **EP 1 779 136 B1**
(45) Date of publication and mention of the grant of the patent: **30.04.2014**
(21) Application number: 05769252.7
(22) Date of filing: 21.07.2005
(51) Int. Cl.: G01S 11/16, G01S 5/30

(54) **SYSTEM AND DEVICE USED TO AUTOMATICALLY DETERMINE THE POSITION OF AN ENTITY WITH RESPECT TO TWO OR MORE REFERENCE ENTITIES IN REAL TIME**
SYSTEM UND EINRICHTUNG ZUM AUTOMATISCHEN BESTIMMEN DER POSITION EINER ENTITÄT IN BEZUG AUF ZWEI ODER MEHR REFERENZENTITÄTEN IN ECHTZEIT
SYSTEME ET DISPOSITIF UTILISE POUR DETERMINER AUTOMATIQUEMENT LA POSITION D'UNE ENTITE PAR RAPPORT A AU MOINS DEUX ENTITES REFERENCE EN TEMPS REEL

(30) Priority: 26.07.2004 IT MC20040100
(43) Date of publication of application: 02.05.2007
(73) Proprietor: Mattoli, Cesare, 06034 Foligno (PG) (IT)
(72) Inventor: Mattoli, Cesare, 06034 Foligno (PG) (IT)
(74) Representative: Provvisionato, Paolo
(86) International application number: PCT/IT2005/000426
(87) International publication number: WO 2006/011175

(56) References cited:
- WO-A-01/73710
- US-A1- 2005 021 179
- US-B1- 6 292 106

## Description

The present patent application for industrial invention refers to a system used to automatically determine the position of an entity with respect to two or more reference entities in real time.

In case of a mobile entity, the periodical determination of its position by the system of the invention allows to calculate other parameters and units, such as the speed or direction of the mobile entity, by means of a suitable known data processing techniques.

With respect to other equivalent systems such as the systems disclosed in document US 6292106 or document WO 01/73710, the system of the invention are characterised by higher measurement accuracy and simpler installation.

In addition to accurate distance calculation, the other purposes of the invention include, for instances, to devise a detection system that makes use of a simple, easy-to-make device, also in portable version, which can be used whenever accurate fast topographical measurements are needed, such as in case of a car accident.

The system of the invention is based on the transmission of two consecutive coded signals, with pre-determined time interval, by a reference source. The first signal is broadcast by means of radio waves and the second signal by means of acoustic waves; the second signal is followed by an acoustic signal emitted by a reference entity after a preset time interval.

According to the system of the invention, the mobile entity is provided with a processing device that calculates the distance of the entity from the transmission source starting from the measurement of the time interval elapsed between the reception of the two consecutive signals and the next signal emitted by the other reference source in real time and automatically, calculating its position on the plane.

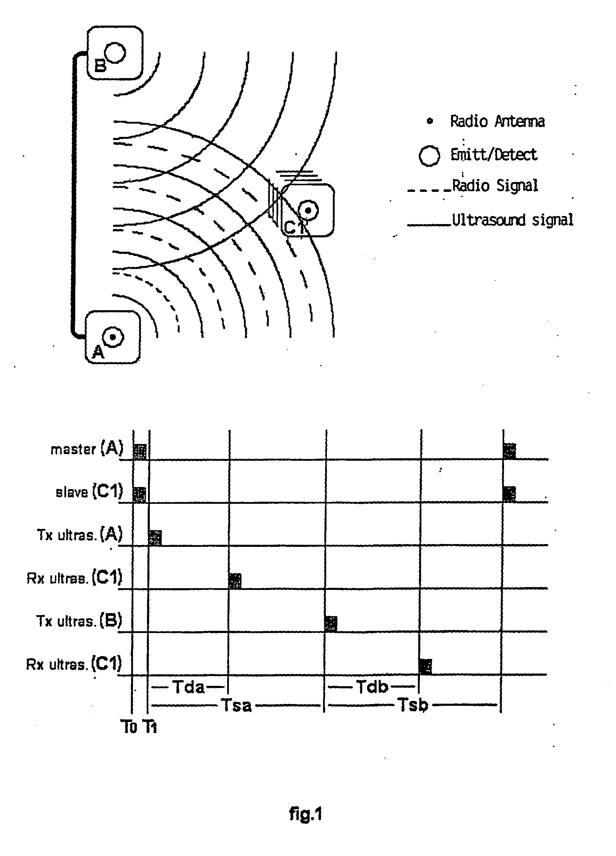

For major clarity the description of the system according to the invention continues with reference to the enclosed drawings, which are intended for purposes of illustration only and not in a limiting sense, whereby Figures 1 to 4 are diagrammatic views of the device of the invention in four different embodiments, combined with a chart showing the sequence of signals emitted and/or received by the different entities of the device.

According to a first embodiment of the invention, the system includes the features defined in claim 1.

In this embodiment of the invention, the second station B is electrically connected with the first station **A,** in such a way that the ultrasound signal emitter installed in station B receives the signals sent by station **A** via cable.

According to a second embodiment of the invention, the system includes the features defined in claim 2.

Once coordinates of stations A and B are fixed in a reference plane. entity C1 can determine its position in the reference plane by means of suitable geometrical calculations, as long as it is always on the same side with respect to stations A and B.

Time interval Tsa must be higher or equal to the time needed by the acoustic signal emitted by station A to reach entity **C1** and; if necessary, increased by the absorption time of echoes, if any.

In case of a moving entity **C1,** according to the system of the invention, after an additional time interval **Tsb,** the sequence of emitted signals can be repeated cyclically to allow mobile entity **C1** to automatically determine its position time after time, and consequently determine its direction and speed.

Time interval **Tsb** must be higher or equal to the time needed by the acoustic signal emitted by station **B** to reach the mobile entity **C1** and, if necessary, increased by the absorption time of echoes, if any.

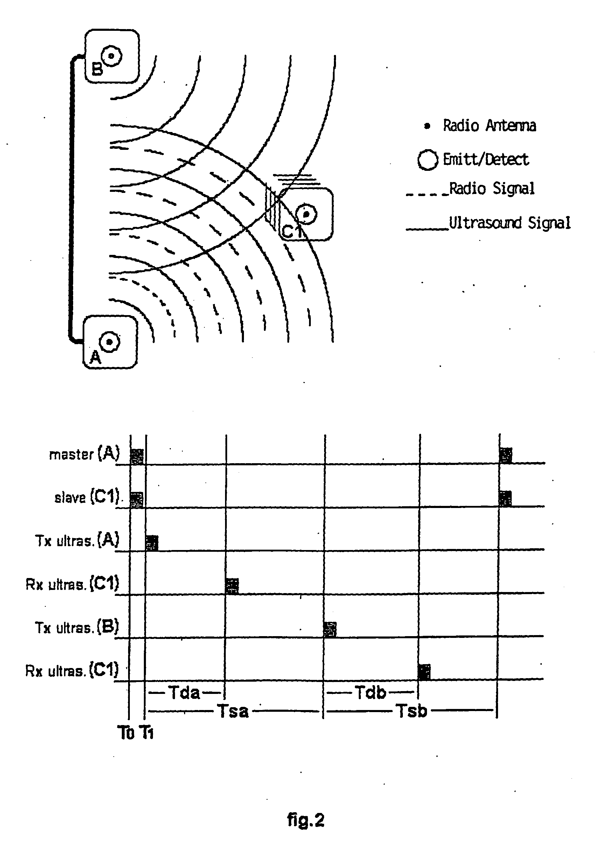

If high accuracy over long distances are required, the variation of sound speed in the air is not negligible. In this case, according to the invention, the speed of sound in the air is measured adding an ultrasound detector in station **B,** as diagrammatically shown in Fig. 2, in order to measure the acoustic propagation time between the two reference stations (that is to say at known distance) and communicate this piece of information to entity **C1** for correction.

If the device is used on an occasional basis in different places, the electrical connection between stations **A** and **B** may be uncomfortable.

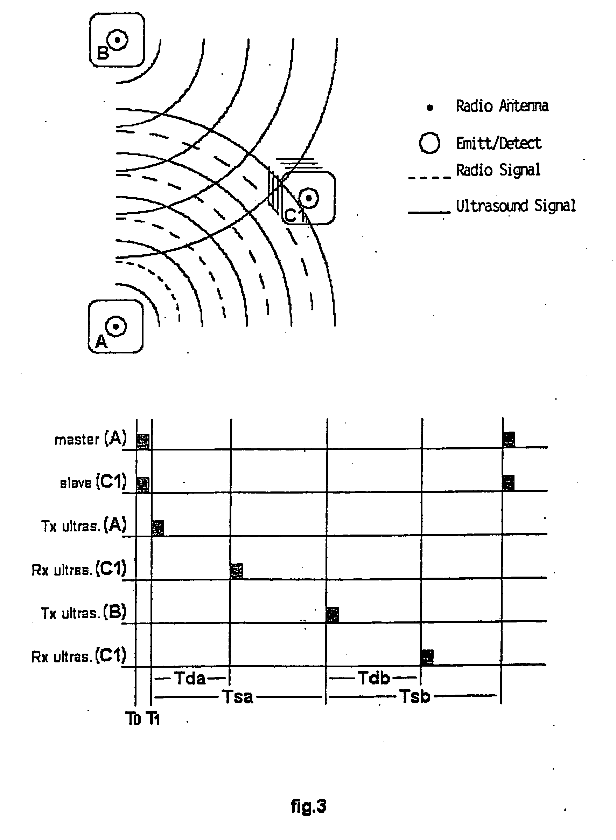

In this case, as shown in Fig. 3, an autonomous communication system is installed in station B, which is configured as secondary (slave), intercepts the radio signal from station **A,** interprets time **T1** and consequently sends the ultrasound acoustic signal after time Tsa.

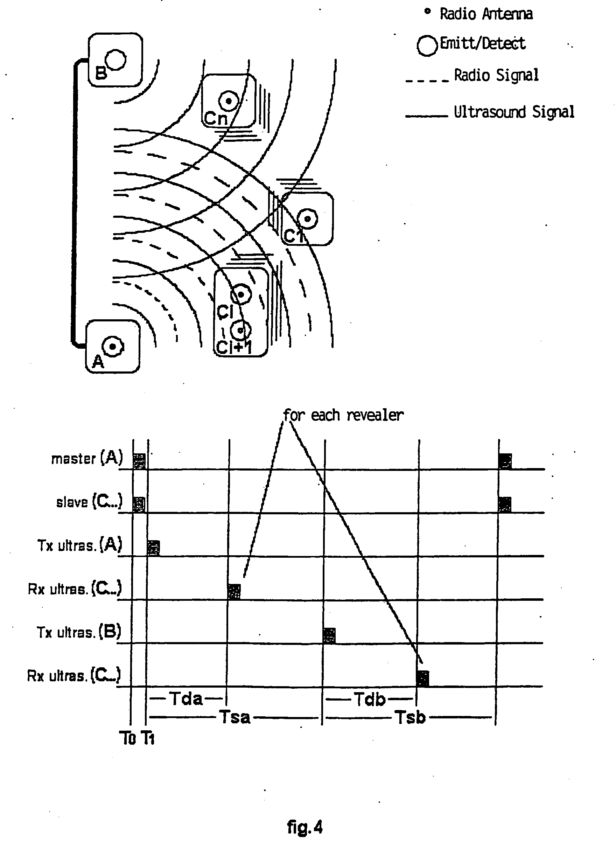

Being stations **A** and **B** the only ultrasound emitters, no interference problems exist in case of an unlimited number of entities **(C1 -** Cn), as shown in Fig. 4, each entity being capable of determining its position without any limitations; moreover, by installing two ultrasound signal detectors **(Cl** and **Ci+1)** in the same entity, the angular position of the said entity can also be determined when standing.

By adding a third reference station, which does not belong to the plane formed by the first two stations **A** and **B** and the mobile entity or entities, the latter can detect their position in the space. From the functional viewpoint, the third reference station emits the ultrasound signal after a suitable time interval known by the mobile entity or entities.

When higher security is required or when it is necessary to discriminate whether the mobile entity is always on the same side with respect to the reference stations, it is necessary to increase the number of the said stations that will send the relevant ultrasound signals at suitable time intervals known by the mobile entity or entities.

## Claims

1. System used to automatically determine the position of an entity with respect to two or more reference entities in real time, comprising:
- one first station A composed of a radio-digital signal communication device and one ultrasound signal emitter;
- one second station B electrically connected with station A, composed of one ultrasound signal emitter and an ultrasound detector;
- one mobile entity C1 provided with a radio digital communication device, one ultrasound signal detector, one chronometer and one electronic data processing and calculation device, used to interpret a time T1, calculate the distance of entity C1 with respect to stations A and B and process the said distances to obtain the relevant position; wherein
- station A sends a first radio-digital signal starting from time T0 with a specific command code and sends a second signal, which is an ultrasound signal, at time T1 after a predefined time interval known by C1;
- station B intercepts an ultrasound signal sent by station A in order to measure the acoustic propagation time between station A and station B and communicate said time to entity C1 for correction;
- after measuring time interval Tda between time T1 and the second signal sent by station A, entity C1 calculates its distance from station A;
- after a predefined time interval Tsa starting from time T1, station A sends another acoustic signal, which is intercepted by entity C1, by means of an ultrasound emitter installed in station B;
- entity C1 calculates its distance from station B, starting from measurement of time interval Tdb between time T1 and the first ultrasound acoustic signal after Tsa, subtracting constant time Tsa that must be also known by C1.

2. System used to automatically determine the position of an entity with respect to two or more reference entities in real time, comprising:
- one first station A composed of a radio-digital signal communication device and one ultrasound signal emitter;
- one second station B composed of one ultrasound signal emitter and an ultrasound detector, and provided with an autonomous communication system used to intercept the radio signal from station A;
- one mobile entity C1 provided with a radio digital communication device, one ultrasound signal detector, one chronometer and one electronic data processing and calculation device, used to interpret a time T1, calculate the distance of entity C1 with respect to stations A and B and process the said distances to obtain the relevant position; wherein
- station A sends a first radio-digital signal starting from time T0 with a specific command code and sends a second signal, which is an ultrasound signal, at time T1 after a predefined time interval known by C1;
- station B intercepts an ultrasound signal sent by station A in order to measure the acoustic propagation time between station A and station B and communicate said time to entity C1 for correction;
- after measuring time interval Tda between time T1 and the second signal sent by station A, entity C1 calculates its distance from station A;
- station B calculates time T I and after a predefined time interval Tsa starting from time T1, it sends an ultrasound acoustic signal, which is intercepted by entity C1;
- entity C1 calculates its distance from station B, starting from measurement of time interval Tdb between time T1 and the first ultrasound acoustic signal after Tsa, subtracting constant time Tsa that must be also known by C1.

3. System used to automatically determine the position of an entity with respect to two reference entities in real time, as defined in claim 1 or 2 , **characterised in that** after a time interval Tsb, starting from the emission of the acoustic signal sent by station B, the sequence of emitted signals is repeated cyclically to allow mobile entity C1 to automatically determine its position time after time and consequently determine its direction and speed.

4. System used to automatically determine the position of an entity with respect to two reference entities in real time, as defined in any one of claims 1 - 3 **characterised in that** it operates with an unlimited number of entities (C1 - Cn).

5. System as defined in claim 4, **characterised in that** two ultrasound signal detectors (Ci and Ci+1) are installed on the same entity in order to calculate the angular position of the entity, including when standing.

6. System as defined in any one of claims 1 - 5, **characterised in that** entities C1 - Cn automatically determine their position on a reference plane, where coordinates of stations A and B are known.

7. System as defined in any one of claims 1 - 6, **characterised in that** it makes use of a third reference station, which does not belong to the plane passing through the two stations A and B and entity or entities C1 - Cn, in such a way that the latter can determine their position in the space, it being provided that the third station sends the ultrasound signal after a suitable time interval known to entity or entities C1 - Cn.

## Patentansprüche

1. System, verwendet zum automatischen Bestimmen der Position eines Objekts relativ zu zwei oder mehr Referenzobjekten in Echtzeit, umfassend:
- eine erste Station A, die aus einer Funkdigitalsignalkommunikationsvorrichtung und einem Ultraschallsignalsender aufgebaut ist;
- einer zweiten Station B, die elektrisch mit Station A verbunden ist und aus einem Ultraschallsignalsender und einem Ultraschalldetektor aufgebaut ist;
- einem mobilen Objekt C1, das mit einer Funkdigitalkommunikationsvorrichtung, einem Ultraschallsignaldetektor, einem Chronometer und einer elektronischen Datenverarbeitungs- und -berechnungsvorrichtung versehen ist, die zur Interpretation einer Zeit T1, zum Berechnen des Abstandes des Objekts C1 relativ zu den Stationen A und B und zum Verarbeiten der Abstände zum Erhalten der relevanten Position verwendet ist; wobei
- Station A ein erstes Funkdigitalsignal beginnend mit der Zeit T0 mit einem speziellen Befehlscode sendet und ein zweites Signal, das ein Ultraschallsignal ist, zu einer Zeit T1 nach einem durch C1 bekannten vorbestimmten Zeitintervall sendet;
- Station B ein durch Station A gesendetes Ultraschallsignal auffängt, um die Schallausbreitungszeit zwischen Station A und Station B zu messen und diese Zeit zu dem Objekt C1 zur Korrektur zu kommunizieren;
- Objekt C1 nach einem Messen eines Zeitintervalls Tda zwischen der Zeit T1 und einem zweiten durch Station A gesendeten Signal seinen Abstand von Station A berechnet;
- Station A nach einem vorbestimmten Zeitintervall Tsa beginnend mit der Zeit T1 ein weiteres akustisches Signal mittels des in Station B installierten Ultraschatlsenders sendet, welches durch das Objekt C1 aufgefangen wird:
- wobei Objekt C1 seinen Abstand von Station B beginnend mit der Messung des Zeitintervalls Tdb zwischen der Zeit T1 und dem ersten akustischen Ultraschallsignal nach Tsa unter Subtraktion der konstanten Zeit Tsa, die auch durch C1 bekannt sein muss, berechnet.

2. System, verwendet zum automatischen Bestimmen der Position eines Objekts relativ zu zwei oder mehr Referenzobjekten in Echtzeit, umfassend:
- eine erste Station A, die aus einer Funkdigitalsignalkommunikationsvorrichtung und einem Ultraschallsignalsender aufgebaut Ist;
- eine zweite Station B, die aus einem Ultraschallsignalsender und einem Ultraschalldetektor aufgebaut Ist und mit einem autonomen Kommunikationssystem versehen ist, das zum Auffangen des Radiosignals von Station A verwendet wird;
- ein mobiles Objekt C1, das mit einer Funkdigitalkommunikationsvorrichtung, einem Ultraschallsignaldetektor, einem Chronometer und einer elektronischen Datenverarbeitungs- und -berechnungsvorrichtung versehen Ist, die zum Interpretieren einer Zeit T1, zum Berechnen des Abstandes des Objekts C1 relativ zu den Stationen A und B und zum Verarbeiten der Abstände zum Erhalten der relevanten Position verwendet werden; wobei
- Station A ein erstes Funkdigitalsignal beginnend mit der Zeit T0 mit einem speziellen Befehlscode sendet und zu der Zeit T1 nach einem durch C1 bekannten vorbestimmten Zeitintervall ein zweites Signal sendet, das ein Ultraschallsignal ist;
- Station B ein durch Station A gesendetes Ultraschallsignal auffängt, um die Schallausbreitungszeit zwischen Station A und Station B zu messen und diese Zeit zu dem Objekt C1 zur Korrektur kommuniziert;
- Objekt C1 nach Messen eines Zeitintervalls Tda zwischen der Zeit T1 und dem zweiten durch Station A gesendeten Signal seinen Abstand von Station A berechnet;
- Station B die Zeit T1 berechnet und nach einem vorbestimmten Zeitintervall, das mit der Zeit T1 beginnt, ein Ultraschallsignal sendet, das durch das Objekt C1 aufgefangen wird;
- Objekt C1 seinen Abstand von Station B beginnend mit der Messung des Zeitintervalls Tdb zwischen der Zeit T1 und dem ersten akustischen Ultraschallsignal nach Tsa unter Subtraktion der konstanten Zeit Tsa berechnet, die auch durch C1 bekannt sein muss.

3. System, verwendet zum automatischen Bestimmen der Position eines Objekts relativ zu zwei Referenzobjekten in Echtzeit, nach Anspruch 1 oder 2, **dadurch gekennzeichnet, dass** die Sequenz von gesendeten Signalen nach einem Zeltintervall Tsb, die mit dem Senden des durch Station B gesendeten akustischen Signals beginnt, zyklisch wiederholt wird, damit das mobile Objekt C1 automatisch seine Position von Zeit zu Zeit bestimmen kann und folglich seine Richtung und Geschwindigkeit bestimmen kann.

4. System, verwendet zum automatischen Bestimmen der Position eines Objekts relativ zu zwei Referenzobjekten in Echtzeit, nach einem der Ansprüche 1 bis 3, **dadurch gekennzeichnet, dass** es mit einer unbegrenzten Anzahl von Objekten (C1 - Cn) betrieben wird bzw. funktioniert.

5. System nach Anspruch 4, **dadurch gekennzeichnet, dass** zwei Ultraschallsignaldetektoren (Ci und Ci+1) an dem gleichen Objekt installiert sind, um die Winkelposition des Objekts zu berechnen, auch im Stand.

6. System nach einem der Ansprüche 1 bis 5, **dadurch gekennzeichnet, dass** Objekte C1 - Cn automatisch ihre Position an einer Referenzebene bestimmen, wo Koordinaten der Stationen A und B bekannt sind.

7. System nach einem der Ansprüche 1 bis 6, **dadurch gekennzeichnet, dass** es eine dritte Referenzstation verwendet, die nicht zu der Ebene, die durch die beiden Stationen A und B und Objekt oder Objekte C1 - Cn geht, so dass Letzteres oder die Letzteren ihre Position in dem Raum bestimmen kann bzw. können, wobei vorgesehen ist, dass die dritte Station das Ultraschallsignal nach einem durch das Objekt oder die Objekte C1 - Cn bekannten geeigneten Zeitintervall sendet.

## Revendications

1. Système utilisé pour déterminer automatiquement la position d'une entité par rapport à au moins deux entités de référence en temps réel, comprenant :
- une première station A composée d'un dispositif de communication de signal radio numérique et d'un émetteur de signal d'ultrasons ;
- une deuxième station B reliée électriquement à la station A, composée d'un émetteur de signal d'ultrasons et d'un détecteur d'ultrasons ;
- une entité mobile C1 pourvue d'un dispositif de communication radio numérique, d'un détecteur de signal d'ultrasons, d'un chronomètre et d'un dispositif électronique de traitement de données et de calcul, utilisée pour interpréter un temps T1, calculer la distance de l'entité C1 par rapport aux stations A et B et traiter lesdites distances pour obtenir la position pertinente ; dans lequel
- la station A envoie un premier signal radio numérique commençant à partir du temps T0 avec un code de commande spécifique et envoie un deuxième signal, qui est un signal d'ultrasons, au temps T1 après un intervalle de temps prédéfini connu par C1 ;
- la station B intercepte un signal d'ultrasons envoyé par la station A afin de mesurer le temps de propagation acoustique entre la station A et la station B et de communiquer ledit temps à l'entité C1 à des fins de correction ;
- après la mesure de l'intervalle de temps Tda entre le temps T1 et le deuxième signal envoyé par la station A, l'entité C1 calcule sa distance par rapport à la station A ;
- après un intervalle de temps prédéfini Tsa commençant à partir du temps T1, la station A envoie un autre signal acoustique, qui est intercepté par l'entité C1, au moyen d'un émetteur d'ultrasons installé dans la station B ;
- l'entité C1 calcule sa distance par rapport à la station B, en commençant à partir d'une mesure de l'intervalle de temps Tdb entre le temps T1 et le premier signal acoustique d'ultrasons Tsa, en soustrayant le temps constant Tsa qui doit également être connu par C1.

2. Système utilisé pour déterminer automatiquement la position d'une entité par rapport à au moins deux entités de référence en temps réel, comprenant :
- une première station A composée d'un dispositif de communication de signal radio numérique et d'un émetteur de signal d'ultrasons ;
- une deuxième station B composée d'un émetteur de signal d'ultrasons et d'un détecteur d'ultrasons, et pourvue d'un système de communication autonome utilisé pour intercepter le signal radio provenant de la station A ;
- une entité mobile C1 pourvue d'un dispositif de communication radio numérique, d'un détecteur de signal d'ultrasons, d'un chronomètre et d'un dispositif électronique de traitement de données et de calcul, utilisée pour interpréter un temps T1, calculer la distance de l'entité C1 par rapport aux stations A et B et traiter lesdites distances pour obtenir la position pertinente ; dans lequel
- la station A envoie un premier signal radio numérique commençant à partir du temps T0 avec un code de commande spécifique et envoie un deuxième signal, qui est un signal d'ultrasons, au temps T1 après un intervalle de temps prédéfini connu par C1 ;
- la station B intercepte un signal d'ultrasons envoyé par la station A afin de mesurer le temps de propagation acoustique entre la station A et la station B et de communiquer ledit temps à l'entité C1 à des fins de correction ;
- après la mesure de l'intervalle de temps Tda entre le temps T1 et le deuxième signal envoyé par la station A, l'entité C1 calcule sa distance par rapport à la station A ;
- la station B calcule le temps T1 et, après un intervalle de temps prédéfini Tsa commençant à partir du temps T1, elle envoie un signal acoustique d'ultrasons, qui est intercepté par l'entité C1 ;
- l'entité C1 calcule sa distance par rapport à la station B, en commençant à partir d'une mesure de l'intervalle de temps Tdb entre le temps T1 et le premier signal acoustique d'ultrasons Tsa, en soustrayant le temps constant Tsa qui doit également être connu par C1.

3. Système utilisé pour déterminer automatiquement la position d'une entité par rapport à deux entités de référence en temps réel selon la revendication 1 ou 2, **caractérisé en ce que**, après un intervalle de temps Tsb commençant à partir de l'émission du signal acoustique envoyé par la station B, la séquence de signaux émis est répétée cycliquement pour permettre à l'entité mobile C1 de déterminer automatiquement sa position à répétition et de déterminer par conséquent sa direction et sa vitesse.

4. Système utilisé pour déterminer automatiquement la position d'une entité par rapport à deux entités de référence en temps réel selon l'une quelconque des revendications 1 à 3, **caractérisé en ce qu'**il fonctionne avec un nombre illimité d'entités (C1-Cn).

5. Système selon la revendication 4, **caractérisé en ce que** deux détecteurs de signaux d'ultrasons (Ci et Ci+1) sont installés sur la même entité afin de calculer la position angulaire de l'entité, y compris lorsqu'elle est immobile.

6. Système selon l'une quelconque des revendications 1 à 5, **caractérisé en ce que** les entités C1-Cn déterminent automatiquement leur position sur un plan de référence dans lequel les coordonnées des stations A et B sont connues.

7. Système selon l'une quelconque des revendications 1 à 6, **caractérisé en ce qu'**il utilise une troisième station de référence, qui n'appartient pas au plan passant par les deux stations A et B et l'entité ou les entités C1-Cn, de telle manière que celles-ci puissent déterminer leur position dans l'espace, la troisième station envoyant le signal d'ultrasons après un intervalle de temps adéquat connu par l'entité ou les entités C1 à Cn.
